# EUROPEAN PATENT SPECIFICATION

(11) **EP 4 102 759 B1**
(45) Date of publication and mention of the grant of the patent: **25.11.2026**
(21) Application number: 21768106.3
(22) Date of filing: 22.02.2021
(51) Int. Cl.: H04L 5/00, H04L 1/00

(54) **TRANSMISSION PARAMETER DETERMINATION METHOD AND TRANSMISSION DEVICE**
ÜBERTRAGUNGSPARAMETERBESTIMMUNGSVERFAHREN UND ÜBERTRAGUNGSVORRICHTUNG
PROCÉDÉ DE DÉTERMINATION DE PARAMÈTRES DE TRANSMISSION ET DISPOSITIF DE TRANSMISSION

(30) Priority: 13.03.2020 CN 202010178022
(43) Date of publication of application: 14.12.2022
(73) Proprietor: Huawei Technologies Co., Ltd., Shenzhen, Guangdong 518129, (CN)
(72) Inventor: LIANG, Dandan, Shenzhen, Guangdong 518129 (CN); YU, Jian, Shenzhen, Guangdong 518129 (CN); GAN, Ming, Shenzhen, Guangdong 518129 (CN); LIN, Wei, Shenzhen, Guangdong 518129 (CN)
(74) Representative: Gill Jennings & Every LLP
(86) International application number: PCT/CN2021/077206
(87) International publication number: WO 2021/179893

(56) References cited:
- EP-A1- 3 163 970
- WO-A1-2012/112973
- WO-A1-2019/231293
- CN-A- 105 580 302
- CN-A- 107 710 803
- CN-A- 108 322 283
- CN-A- 109 412 772
- CN-A- 109 412 772
- US-A1- 2017 373 808

## Description

### TECHNICAL FIELD

This application relates to the field of communication technologies, and in particular, to a method for determining a transmission parameter in a wireless local area network (wireless local area network, WLAN) and a transmission device.

### BACKGROUND

As intelligent terminals are extensively applied, people have increasing requirements for data network traffic. To meet the requirements of people for data network traffic, performance of a network system needs to be enhanced continuously. Therefore, a wireless local area network is greatly evolved in this aspect, from the initial 802.11a/b to the 802.11g, the 802.11n, and the 802.11ac, and then to the 802.11ax. With continuous evolution of the standards, a throughput that can be provided by the system keeps increasing, and therefore meets various requirements of users for internet access.

In an 802.11ax system, an extremely high throughput-long training field (high throughput-long training field, HT-LTF) included in a preamble of a physical protocol data unit (physical protocol data unit, PPDU) may be used to implement channel estimation for distinguishing multiple streams in a single-user multiple-input multiple-output (single-user multiple-input multiple-output, SU-MIMO) scenario, or may be used to implement channel estimation for distinguishing multiple users in a multi-user multiple-input multiple-output (multi-user multiple-input multiple-output, MU-MIMO) scenario.

Both the 802.11ac and the 802.11ax perform channel estimation for a MIMO system with a maximum of eight streams. As a throughput continuously increases, the MIMO system needs to support more than eight streams, for example, 16 streams. The existing 802.11ax cannot meet the requirement. This is a technical problem that urgently needs to be resolved.

CN109412772A discloses a method and a device for transmitting and receiving a sounding packet, a base station, and a terminal.

WO2019231293A1 relates to a long training field (LTF) symbol of a wireless LAN. An LTF symbol may be generated on the basis of a first LTF generation sequence used for an odd number stream and a second LTF generation sequence used for an even number stream.

US2017/373808A1 relates to a method for multi-user transmission and reception in a wireless communication system and a device for the same.

EP3163970A1 discloses a transmission device and a method for transmitting a data frame.

### SUMMARY

This application provides a method for determining a transmission parameter and a transmission device, to determine an appropriate quantity of long training field symbols and decrease transmission overheads.

The scope of the invention is defined and limited by the appended independent claims. Further embodiments are set out in the appended dependent claims.

### BRIEF DESCRIPTION OF DRAWINGS

FIG. 1 is a schematic diagram of a structure of a VHT PPDU in 802.11ac;
FIG. 2 is a schematic diagram of a structure of a VHT PPDU including eight VHT-LTFs;
FIG. 3 is a schematic diagram of a structure of an HE PPDU including n HE-LTFs in 802. 11ax;
FIG. 4 is a schematic diagram of a wireless local area network communication system according to this application;
FIG. 5 is a schematic flowchart of a method for determining a transmission parameter according to an embodiment of this application;
FIG. 6 is a schematic diagram of using a frequency domain frequency division multiplexing manner to perform frequency domain transformation on an LTF basic sequence;
FIG. 7 is a schematic diagram of using a frequency domain code division multiplexing manner to perform frequency domain transformation on an LTF basic sequence;
FIG. 8 is still another schematic flowchart of a method for determining a transmission parameter according to an embodiment of this application;
FIG. 9 is still another schematic flowchart of a method for determining a transmission parameter according to an embodiment of this application;
FIG. 10 is a schematic diagram of a structure of a transmission device according to an embodiment of this application;
FIG. 11 is still another schematic diagram of a structure of a transmission device according to an embodiment of this application;
FIG. 12 is still another schematic diagram of a structure of a transmission device according to an embodiment of this application;
FIG. 13 is still another schematic diagram of a structure of a transmission device according to an embodiment of this application;
FIG. 14 is still another schematic diagram of a structure of a transmission device according to an embodiment of this application; and
FIG. 15 is still another schematic diagram of a structure of a transmission device according to an embodiment of this application.

### DESCRIPTION OF EMBODIMENTS

The following describes embodiments of the present invention with reference to accompanying drawings in embodiments of the present invention.

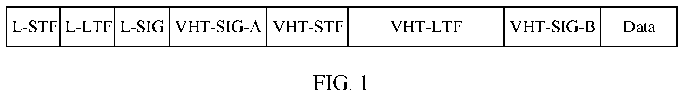

In an 802.11ac system, a structure of a PPDU in 802.11ac is shown in FIG. 1. The PPDU includes a legacy short training field (legacy short training field, L-STF), a legacy long training field (legacy long training field, L-LTF), a legacy signal (legacy signal, L-SIG) field, a very high throughput signal A (very high throughput signal A, VHT-SIG-A), a very high throughput-short training field (very high throughput-short training field, VHT-STF), a VHT-LTF, a very high throughput signal B (very high throughput signal B, VHT-SIG-B), and a data (data) field. The VHT-LTF is used to implement channel estimation for distinguishing multiple streams in a SU-MIMO scenario or multiple users in a MU-MIMO scenario.

To distinguish the multiple streams in the SU-MIMO scenario or the multiple users in the MU-MIMO scenario, one VHT PPDU includes a preamble including VHT-LTF symbols, where subcarriers of each VHT-LTF symbol are multiplied by an item that belongs to a P matrix (P matrix), so that a receive end performs channel estimation. A pilot location of the VHT-LTF is multiplied by an item in a first row of the P matrix to perform phase calibration. The VHT-LTF includes several VHT-LTF symbols. In this way, it may also be understood that the several VHT-LTF symbols are obtained by performing time domain transformation in a time domain code division multiplexing (code division multiplexing, CDM) manner. Specifically, the VHT-LTF is obtained by multiplying the VHT-LTF symbols of the VHT-LTF by elements in different rows of the P matrix (P matrix) in time domain. A quantity N of VHT-LTF symbols included in the VHT-LTF may be determined based on *N_{STS,total}.* For a correspondence between N and *N_{STS,total}*, refer to Table 1. In Table 1, *N_{STS,total}* is a quantity of streams in the SU-MIMO scenario or a quantity of users in the MU-MIMO scenario.

**Table 1**

| N_{STS,total} | N |
|---|---|
| 7 or 8 | 8 |
| 5 or 6 | 6 |
| 1, 2, 3, or 4 | 4 |

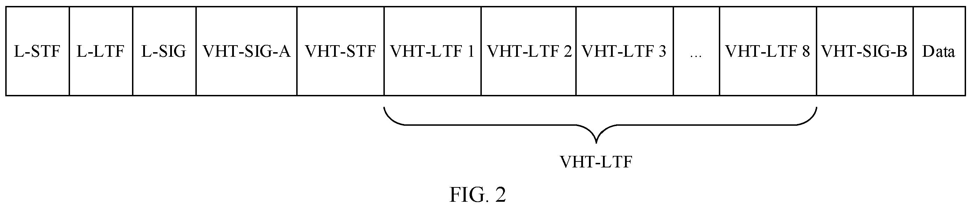

An example in which *N_{STS,total}* is the quantity of streams in the SU-MIMO scenario is used. For example, when *N_{STS,total}* is equal to 8, a value of N is 8. In other words, when the quantity *N_{STS,total}* of streams in the SU-MIMO scenario is 8, to distinguish eight data streams in the scenario, when the VHT-LTF is generated in the time domain CDM manner, the VHT-LTF needs to include eight VHT-LTF symbols. Specifically, a PPDU including VHT-LTFs may be shown in FIG. 2.

However, 802.11ac does not provide a channel estimation method for 16 streams of an EHT. In 802.11ac, a maximum quantity of VHT-LTF symbols is 8, and a maximum size of the P matrix is also 8. In other words, a CDM mechanism supports estimation of eight streams by using a maximum of eight VHT-LTF symbols.

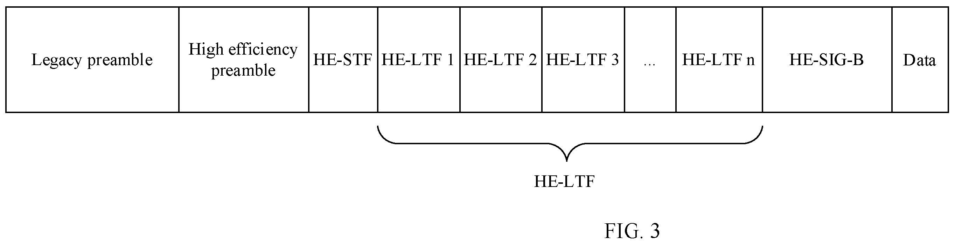

In an 802.11ax system, a structure of a PPDU in 802.11ax is shown in FIG. 3. The PPDU includes a legacy preamble (legacy preamble) field (the legacy preamble field includes: an L-STF, an L-LTF, and an L-SIG), a high efficiency preamble (HE preamble) field, a high efficiency short training field (HE-STF), HE-LTFs, and a data (data) field. The HE-LTF is used to implement channel estimation for distinguishing multiple streams in a SU-MIMO scenario or multiple users in a MU-MIMO scenario. Characteristics such as orthogonal frequency division multiple access (orthogonal frequency division multiple access, OFDMA), uplink multi-user multiple-input multiple-output (UL-MU-MIMO), and an outdoor scenario are introduced in 802.11ax. Therefore, to distinguish the multiple streams in the SU-MIMO scenario or the multiple users in the MU-MIMO scenario, in a 802.11ax technology, the HE-LTF needs to include several HE-LTF symbols. When the several HE-LTF symbols are generated, several orthogonal sequences are generated in frequency domain through matrix mapping of a P matrix. In one HE-LTF symbol, each stream is multiplied by an element in one column of the P matrix. In this way, it may also be considered that the HE-LTF is obtained by performing time domain transformation in a time domain CDM manner. Specifically, the HE-LTF is obtained by multiplying the HE-LTF symbols of the HE-LTF by elements in different rows of the P matrix in time domain. Different from 11ac, because the OFDMA characteristic is introduced in 11ax, to make quantities of HE-LTF symbols in the PPDU same, a quantity N of HE-LTF symbols included in the HE-LTF in 11ax is determined based on *N_{HE-LTF}.* For a correspondence between N and *N_{HE-LTF},* refer to Table 2. In Table 2, *N_{HE-LTF}* is a maximum quantity of streams in the SU-MIMO scenario or a maximum quantity of users in the MU-MIMO scenario.

**Table 2**

| N_{HE-LTF} | N |
|---|---|
| 8 | 8 |
| 6 | 6 |
| 1, 2, or 4 | 4 |

However, 802.11ax does not provide a channel estimation method for 16 streams of an EHT. In 802.11ax, a maximum quantity of HE-LTF symbols is 8, and a maximum size of the P matrix is also 8. In other words, a CDM mechanism supports estimation of eight streams by using a maximum of eight VHT-LTF symbols.

This application provides a method for determining a transmission parameter and a transmission device. A first transmission device may determine an appropriate quantity of long training field symbols by indicating a predefined quantity of long training field symbols, or by indicating a long training field parameter used to determine a quantity of long training field symbols, or by predefining a correspondence between a total quantity of spatial streams and a quantity of long training field symbols, to reduce redundancy of a preamble of a PPDU and decrease transmission overheads. A second transmission device may obtain an accurate quantity of long training field symbols.

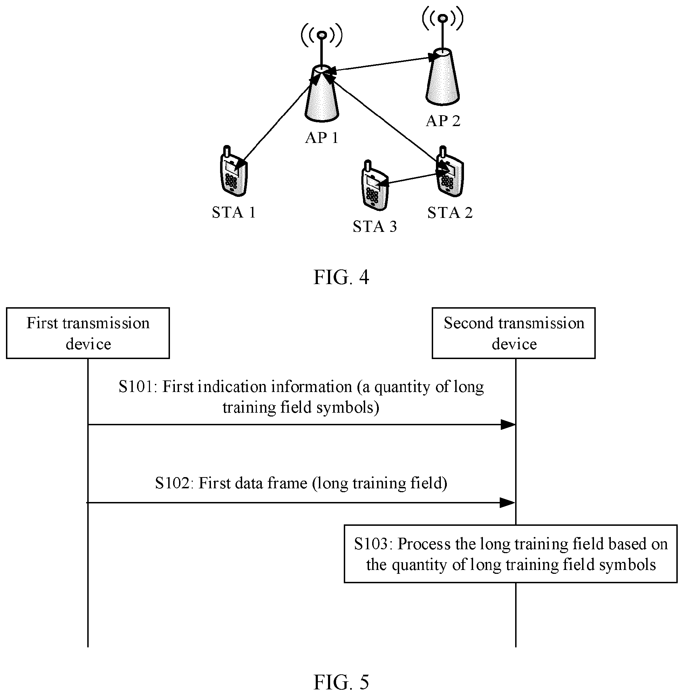

FIG. 4 is a schematic diagram of a wireless local area network communication system according to this application. The communication system may include one or more access points (access points, APs) and one or more stations (stations). The AP may communicate with one or more STAs, or the AP may communicate with one or more APs, or the STA may communicate with one or more STAs.

The access point may be an access point used by a terminal device (such as a mobile phone) to access a wired (or wireless) network, and is mainly deployed at home, in a building, and in a park. A typical coverage radius is tens of meters to a hundred meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard. The access point in this application may be a high efficient (high efficient, HE) AP or an extremely high throughput (extremely high throughput, EHT) AP, or may be an access point applicable to a future Wi-Fi standard.

The station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function. Optionally, the station may support the 802.11be standard. The station may also support a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard.

The station in this application may be a high efficient (high efficiency, HE) STA or an extremely high throughput (extremely high throughput, EHT) STA, or may be a STA applicable to a future Wi-Fi standard.

For example, the access point and the station may be devices applied to the internet of vehicles, internet of things nodes or sensors in the internet of things (internet of things, IoT), smart cameras, smart remote controls, and smart water meters in a smart home, and sensors in a smart city.

Although embodiments of this application are mainly described by using a network deployed based on IEEE 802.11 as an example, a person skilled in the art easily understands that various aspects of this application may be extended to other networks using various standards or protocols such as Bluetooth (Bluetooth), a high performance radio LAN (high performance radio LAN, HIPERLAN) (a wireless standard similar to the IEEE 802.11 standard and mainly used in Europe), a wide area network (WAN), a wireless local area network (wireless local area network, WLAN), a personal area network (personal area network, PAN), or other networks currently known or later developed. Therefore, the various aspects provided in this application are applicable to any suitable wireless network regardless of coverage and a wireless access protocol. It should be noted that the terms "system" and "network" in embodiments of the present invention may be used interchangeably. "A plurality of" means two or more than two. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

FIG. 5 is a schematic flowchart of a method for determining a transmission parameter according to an embodiment of this application. The method includes the following steps.

S101: A first transmission device sends first indication information.

Correspondingly, the second transmission device receives the first indication information.

The first indication information indicates a quantity of long training field symbols, the quantity of long training field symbols is predetermined based on one or more long training field parameters of a quantity of subcarrier groups, a quantity of subcarriers in a subcarrier group, a total quantity of spatial streams, a quantity of spatial stream groups, and a quantity of spatial streams in a spatial stream group; the total quantity of spatial streams is greater than 8, and the quantity of long training field symbols is less than or equal to 8.

In this embodiment, to reduce signaling overheads and reduce a latency of receiving a data field, a long training field (long training field, LTF) used for channel estimation for distinguishing multiple spatial streams in a MIMO scenario is generated in a frequency domain transformation manner and a time domain transformation manner. The multiple spatial streams refer to multiple data streams of a user in a SU-MIMO scenario, or data streams of multiple users in a MU-MIMO scenario.

Parameters for generating the LTF field include: a frequency domain transformation parameter and a time domain transformation parameter that are required for generating the LTF field. The frequency domain transformation parameter may include a quantity M of subcarriers for distinguishing spatial streams, a quantity L of elements in an LTF basic sequence, and a total quantity S of subcarriers. The time domain transformation parameter may include a quantity N of LTF symbols included in the LTF field.

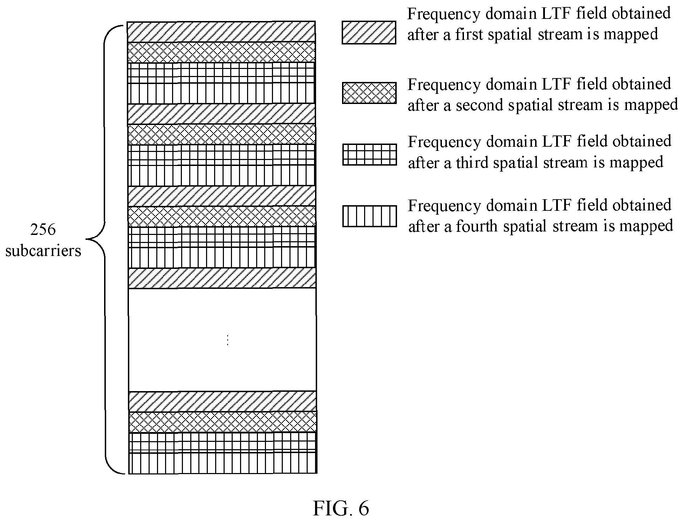

Frequency domain transformation may be performed on the LTF basic sequence in a frequency domain frequency division multiplexing (frequency division multiplexing, FDM) manner shown in FIG. 6 to obtain the LTF symbols. FDM is also referred to as tone interpolation (tone-interleaved). In FIG. 6, if four spatial streams are frequency-division multiplexed, M = 4. L is generally predetermined, for example, L = 56, and a quantity S of subcarriers = 256.

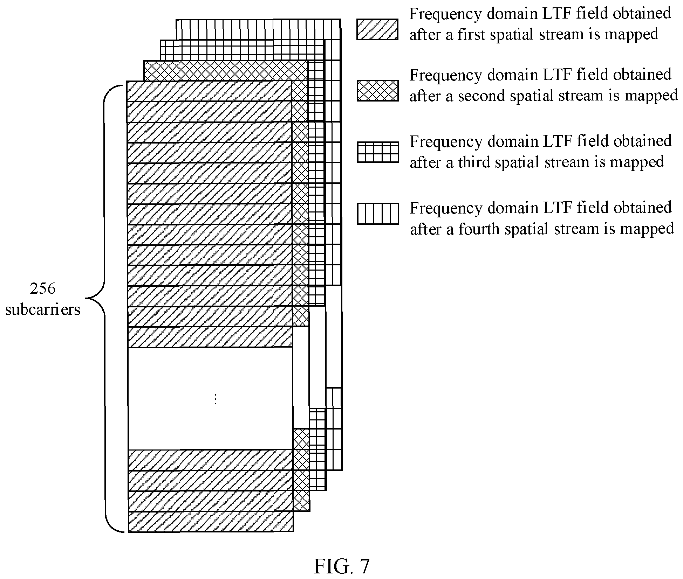

Alternatively, frequency domain transformation may be performed on the LTF basic sequence in a frequency domain code division multiplexing manner shown in FIG. 7 to obtain the LTF symbols. In FIG. 7, if four spatial streams are code division multiplexed, M = 4. L is generally predetermined, for example, L = 56, and a quantity S of subcarriers = 256.

Then, the time domain CDM manner is used to perform time domain transformation on the LTF symbols to obtain the LTF field. Specifically, a method for generating the LTF by using a P matrix in 11ac and 11ax is still used. To distinguish a CDM method in frequency domain, the method is referred to as time domain CDM. However, both matrix generation and mapping are completed in frequency domain.

It should be noted that a size of a P matrix used to perform frequency domain CDM transformation may be different from a size of a P matrix used to perform time domain CDM transformation.

This embodiment may be applied to 802.11ac, 802.11ax, 802.11be, a next-generation wireless local area network system thereof, and the like. In 802.11be, a PPDU includes a legacy preamble (legacy preamble) field (the legacy preamble field includes: an L-STF, an L-LTF, and an L-SIG), an extremely high throughput preamble (EHT preamble) field, an extremely high throughput short training field (EHT-STF), an extremely high throughput long training field (extremely high throughput long training field, EHT-LTF), and a data (data) field. The EHT-LTF is used to implement channel estimation for distinguishing the multiple streams in the SU-MIMO scenario or the multiple users in the MU-MIMO scenario. The long training field may be but is not limited to the EHT-LTF. The total quantity of spatial streams may be 8, or may be greater than 8. For example, in an 802.11be system, the total quantity of spatial streams is 16.

The quantity of long training field symbols is not limited in this embodiment. For example, a maximum quantity of long training field symbols may be 8 or 16. When the total quantity of spatial streams increases, the quantity of LTF field symbols needs to be reduced. The quantity of long training field symbols is predetermined. For example, the quantity of long training field symbols may be pre-stored in the first transmission device and the second transmission device, or may be pre-configured by the first transmission device for the second transmission device.

In an actual transmission process, the first transmission device needs to indicate the quantity of long training field symbols used in the transmission process. Therefore, the first transmission device sends the first indication information to the second transmission device, where the first indication information indicates the quantity of long training field symbols. The first transmission device may be an AP, and the second transmission device is a STA. Alternatively, the first transmission device may be a STA, and the second transmission device may be an AP. The first transmission device and the second transmission device are not specifically limited in this embodiment.

As described above, the long training field is obtained by multiplying several long training field symbols by sequences in different rows of the P matrix in time domain. In this embodiment, a size of the P matrix corresponds to the quantity of long training field symbols. For example, if the quantity of long training field symbols is 10, the P matrix is P_{10 x 10}. For another example, if the quantity of long training field symbols is 16, the P matrix is P_{16 x 16}.

In addition, a plurality of spatial streams multiplexed in frequency domain may be referred to as one spatial stream group, and a total quantity *N_{STS,total}* of spatial streams may be divided into one or more spatial stream groups. Alternatively, subcarriers may be divided. S subcarriers may be divided into one or more subcarrier groups. One subcarrier group includes N_{g} subcarriers. In this embodiment of this application, N_{g} indicates a quantity of subcarriers included in one subcarrier group. One subcarrier group may include subcarriers to which one or more spatial stream groups are mapped.

In this embodiment, the first indication information may further include one or more pieces of the following information: the quantity of subcarrier groups, the quantity of subcarriers in a subcarrier group, the total quantity of spatial streams, the quantity of spatial stream groups, and the quantity of spatial streams in a spatial stream group. After receiving the first indication information, the second transmission device may perform time domain inverse transformation on the received long training field to obtain the long training field symbols, obtain the P matrix based on the quantity of long training field symbols; and then perform frequency domain inverse transformation on the long training field symbols based on one or more pieces of the foregoing information and the P matrix to obtain a long training basic sequence. The long training basic sequence is used for channel estimation.

The quantity of subcarriers in a subcarrier group may be obtained based on the total quantity of subcarriers and the quantity of subcarrier groups. Alternatively, the quantity of subcarriers in a subcarrier group may be obtained based on the total quantity of spatial streams and the quantity of spatial stream groups. Alternatively, the quantity of subcarriers in a subcarrier group may be obtained based on the total quantity of spatial streams and the quantity of spatial streams in a spatial stream group. Alternatively, the quantity of subcarriers in a subcarrier group may be a preset value.

An example in which the first indication information indicates the quantity of subcarriers in a subcarrier group is used for description. Specifically, in an implementation, the first indication information includes a first bit and a second bit, the first bit indicates the quantity of subcarriers in a subcarrier group, and the second bit indicates the quantity of long training field symbols. It should be noted that the "first bit" and the "second bit" herein do not refer to a quantity of bits. The first bit may be one or more bits, and the second bit may also be one or more bits.

For example, the first indication information includes four bits, the first bit includes one bit, and the second bit includes three bits.

When the first bit is a first value, the first bit indicates that the quantity of subcarriers in a subcarrier group is 1, and the second bit indicates that the quantity of long training field symbols is any one of 1, 2, 4, 6, or 8.

When the first bit is a second value, the first bit indicates that the quantity of subcarriers in a subcarrier group is 2 or 4, and the second bit indicates that the quantity of long training field symbols is any one of 1, 2, 4, 6, or 8.

For example, the first bit is a high-order bit B3 in the first indication information, and the second bit is B0 to B2 in the first indication information. Certainly, the first bit may alternatively be a low-order bit or any bit in the first indication information.

For example, when B3 = 0, it indicates that N_{g} = 1, first five values of B0 to B2 respectively indicate 1, 2, 4, 6, and 8 LTF symbols, and other values of B0 to B2 may be reserved, or indicate other LTF symbols. When B3 = 1, it indicates that N_{g} = 2 or 4, first five values of B0 to B2 respectively indicate 1, 2, 4, 6, and 8 LTF symbols, and other values of B0 to B2 may be reserved, or indicate other LTF symbols. It may be understood that, alternatively, when B3 = 0, it indicates that N_{g} = 2 or 4; and when B3 = 1, it indicates that N_{g} = 1. This is not limited in this embodiment. Details are shown in the following Table 3.

**Table 3**

| Bit/Value | Indicated information | Bit/Value | Indicated information |
|---|---|---|---|
| B3 | N_{g} | B0 to B2 | Quantity of LTF symbols |
| 0 | 1 | 0 | 1 |
| | | 1 | 2 |
| | | 2 | 4 |
| | | 3 | 6 |
| | | 4 | 8 |
| | | Other values | Reserved |
| 1 | 2or4 | 0 | 1 |
| | | 1 | 2 |
| | | 2 | 4 |
| | | 3 | 6 |
| | | 4 | 8 |
| | | Other values | Reserved |

That the total quantity of subcarriers is S is used as an example. When N_{g} = 1, it indicates that the S subcarriers are divided into S subcarrier groups, and each subcarrier group includes one subcarrier. If the second bit indicates that the quantity of LTF symbols is 1, it indicates that one symbol is sent in time domain. If the second bit indicates that the quantity of LTF symbols is 2, it indicates that two symbols are sent in time domain. If the second bit indicates that the quantity of LTF symbols is 4, it indicates that four symbols are sent in time domain. The rest can be deduced by analogy.

When N_{g} = 1, all spatial streams in one or more spatial stream groups on which frequency domain multiplexing is performed are mapped to a same subcarrier. When N_{g} = 2 or 4, it indicates that one subcarrier group includes two or four subcarriers. For example, it is assumed that one spatial stream group is included, the spatial stream group includes four spatial streams, and N_{g} = 2. In this case, two spatial streams may be mapped to a first subcarrier, and the other two spatial streams may be mapped to a second subcarrier. For another example, it is assumed that three spatial stream groups are included, a first spatial stream group includes two spatial streams, a second spatial stream group includes three spatial streams, a third spatial stream group includes eight spatial streams, and N_{g} = 2. In this case, a total of five spatial streams in the first spatial stream group and the second spatial stream group may be mapped to a first subcarrier, and the eight spatial streams in the third spatial stream group may be mapped to a second subcarrier. A spatial stream may be mapped to a subcarrier based on indication information or in a default manner.

It may be understood that if N_{g} and the quantity of LTF field symbols are indicated together (in other words, included in a same piece of indication information), N_{g} may indicate 2 or 4 when B3 = 1. Therefore, whether N_{g} is 2 or 4 may alternatively be indicated by using other indication information. In addition, N_{g} may be determined to be 2 or 4 in another manner. For example, if a 4x LTF is used, N_{g} = 4; and if a 2x LTF is used, N_{g} = 2. Alternatively, if a 4x LTF is used, N_{g} = 2; and if a 2x LTF is used, N_{g} = 4. For a 1x LTF, a symbol length of one LTF is 3.2 µs. For the 2x LTF, a symbol length of one LTF is 6.4 µs. For the 4x LTF, a symbol length of one LTF is 12.8 µs. In this implementation, indication overheads can be reduced.

An example in which the total quantity of spatial streams is 16 is used. It is assumed that two spatial stream groups are included, and each spatial stream group includes eight streams. When the total quantity S of subcarriers = 256 and N_{g} = 1, it indicates that the 256 subcarriers are divided into 256 subcarrier groups, and 16 spatial streams in the two spatial stream groups are mapped to each subcarrier in the 256 subcarriers. When the total quantity S of subcarriers is 256 and N_{g} is 2, it indicates that the 256 subcarriers are divided into 256/2 = 128 groups, a first spatial stream group in the two spatial stream groups is mapped to a first subcarrier in each subcarrier group, and a second spatial stream group is mapped to a second subcarrier in each subcarrier group.

In another implementation, the first indication information includes a third bit, and the third bit indicates the quantity of subcarriers in a subcarrier group and the quantity of long training field symbols. The third bit does not refer to a quantity of bits, and the third bit may include one or more bits.

For example, the third bit includes four bits;
a first value to a fifth value of the third bit indicate that the quantity of subcarriers in a subcarrier group is 1, and the first value to the fifth value of the third bit respectively indicate that the quantity of long training field symbols is 1, 2, 4, 6, and 8 symbols;
a sixth value to a tenth value of the third bit indicate that the quantity of subcarriers in a subcarrier group is 2, and the sixth value to the tenth value of the third bit respectively indicate that the quantity of long training field symbols is 1, 2, 4, 6, and 8 symbols; and
an eleventh value to a fifteenth value of the third bit indicate that the quantity of subcarriers in a subcarrier group is 4, and the eleventh value to the fifteenth value of the third bit respectively indicate that the quantity of long training field symbols is 1, 2, 4, 6, and 8 symbols.

For example, 0 to 4 in the third bit indicate that N_{g} = 1, and the quantity of LTF symbols is respectively 1, 2, 4, 6, and 8 symbols; 5 to 9 in the third bit indicate that N_{g} = 2, and the quantity of LTF symbols is respectively 1, 2, 4, 6, and 8 symbols; 10 to 14 in the third bit indicate that N_{g} = 4, and the quantity of LTF symbols is respectively 1, 2, 4, 6, and 8 symbols; and other bits are reserved. Details are shown in the following Table 4.

**Table 4**

| Bit value (4 bits) | N_{g} | Quantity of LTF symbols |
|---|---|---|
| 0 | 1 | 1 |
| 1 | | 2 |
| 2 | | 4 |
| 3 | | 6 |
| 4 | | 8 |
| 5 | 2 | 1 |
| 6 | | 2 |
| 7 | | 4 |
| 8 | | 6 |
| 9 | | 8 |
| 10 | 4 | 1 |
| 11 | | 2 |
| 12 | | 4 |
| 13 | | 6 |
| 14 | | 8 |
| Other values | Reserved | Reserved |

For example, it is assumed that a value of the third bit is 5. In this case, it indicates that N_{g} = 2, and the quantity of LTF symbols is 1, the total quantity of subcarriers (S subcarriers) are divided into S/2 groups, a quantity of subcarriers in each subcarrier group is 2, and one symbol is sent in time domain. It is assumed that a value of the third bit is 10. In this case, it indicates that N_{g} = 4, and the quantity of LTF symbols is 1, the S subcarriers are divided into S/4 groups, a quantity of subcarriers in each subcarrier group is 4, and one symbol is sent in time domain. The rest can be deduced by analogy.

If a channel changes quickly, a Doppler characteristic of the channel needs to be considered. In the foregoing two implementations, the Doppler characteristic of the channel is not considered.

In still another implementation, if the Doppler characteristic is considered, the first indication information includes a fourth bit, and the fourth bit includes four bits;
a first value of the fourth bit indicates that the quantity of long training field symbols is 1 and a sending period of one long training field symbol is 10 symbols;
a second value of the fourth bit indicates that the quantity of long training field symbols is 2 and a sending period of two long training field symbols is 10 symbols;
a third value of the fourth bit indicates that the quantity of long training field symbols is 4 and a sending period of four long training field symbols is 10 symbols; and
a fourth value of the fourth bit indicates that the quantity of long training field symbols is 1 and a sending period of one long training field symbol is 20 symbols.

For example, when a value of the fourth bit is 0, the quantity of LTF symbols is 1, and a midamble periodicity (midamble periodicity) of one LTF symbol is 10 symbols, in other words, the LTF symbol is sent 10 times in one period. When the value of the fourth bit is 1, the quantity of LTF symbols is 2, and a sending period of two LTF symbols is 10 symbols, in other words, two LTF symbols are respectively sent five times in one period. When the value of the fourth bit is 2, the quantity of LTF symbols is 4, and a sending period of four LTF symbols is 10 symbols, in other words, in one period, a first symbol is sent twice, a second symbol is sent twice, a third symbol is sent twice, a fourth symbol is sent twice, then the first symbol is sent twice, the second symbol is sent twice in a next period, .... When the value of the fourth bit is 4, the quantity of LTF symbols is 1, and a sending period of one LTF symbol is 20 symbols, in other words, the symbol is sent 20 times in one period. Details are shown in the following Table 5.

**Table 5**

| Bit value (4 bits) | Quantity of LTF symbols | Midamble periodicity |
|---|---|---|
| 0 | 1 | 10 symbols |
| 1 | 2 | 10 symbols |
| 2 | 4 | 10 symbols |
| 3 | Reserved | Reserved |
| 4 | 1 | 20 symbols |
| Other values | Reserved | Reserved |

In still another implementation, the first indication information includes a fifth bit, and the fifth bit indicates the quantity of long training field symbols.

For example, the fifth bit includes three bits, and a first value to an eighth value of the fifth bit respectively indicate that the quantity of long training field symbols is 1, 2, 3, 4, 5, 6, 7, and 8. Details are shown in the following Table 6.

**Table 6**

| Bit value (4 bits) | Quantity of LTF symbols |
|---|---|
| 0 | 1 |
| 1 | 2 |
| 2 | 3 |
| 3 | 4 |
| 4 | 5 |
| 5 | 6 |
| 6 | 7 |
| 7 | 8 |
| Other values | Reserved |

Optionally, the fifth bit may alternatively include four bits. A first value to an eighth value of the fifth bit respectively indicate that the quantity of long training field symbols is 1, 2, 3, 4, 5, 6, 7, and 8, and other values are reserved.

S102: The first transmission device sends a first data frame.

Correspondingly, the second transmission device receives the first data frame.

The first data frame includes the long training field.

The first data frame carries the long training field, and the quantity of long training field symbols is less than or equal to 8, to decrease transmission overheads. The long training basic sequence is used for channel estimation.

S103: The second transmission device processes the long training field based on the quantity of long training field symbols.

After receiving the first indication information and the first data frame, the second transmission device may perform time domain inverse transformation on the received long training field to obtain the long training field symbols, obtain the P matrix based on the quantity of long training field symbols; and then perform frequency domain inverse transformation on the long training field symbols based on one or more pieces of the foregoing information and the P matrix to obtain the long training basic sequence. Channel estimation may be performed based on the long training field.

In 802.11be or a next-generation Wi-Fi standard, a quantity of streams is increased to 16. If a 1x LTF type is used, a symbol length of one LTF is 3.2 µs, and an LTF field has an OFDM symbol length of 16 x 3.2 µs. In this case, a transmission time of a preamble increases. However, if a 4x HE-LTF type is used, a symbol length of one LTF is 12.8 µs, and an OFDM symbol length of 16 x 12.8 µs is required. In this case, a transmission time of a preamble is very long, and transmission efficiency of the preamble is very low. According to the solution in this embodiment, the quantity of long training field symbols is predetermined based on the total quantity of spatial streams, the quantity of spatial stream groups, and the quantity of subcarriers in a subcarrier group. The quantity of long training field symbols is reduced, so that redundancy of a preamble of a PPDU can be reduced and transmission overheads can be decreased.

According to the method for determining a transmission parameter provided in this embodiment of this application, the predefined quantity of long training field symbols is reduced, so that redundancy of the preamble of the PPDU can be reduced and the transmission overheads can be decreased. In addition, the first transmission device indicates the predetermined quantity of long training field symbols, and there is no need to calculate the quantity of long training field symbols, reducing processing resources of the first transmission device.

The quantity of LTF symbols may be predefined, or may be determined by using another transmission parameter. The following embodiment describes determining the quantity of LTF symbols by using the another transmission parameter.

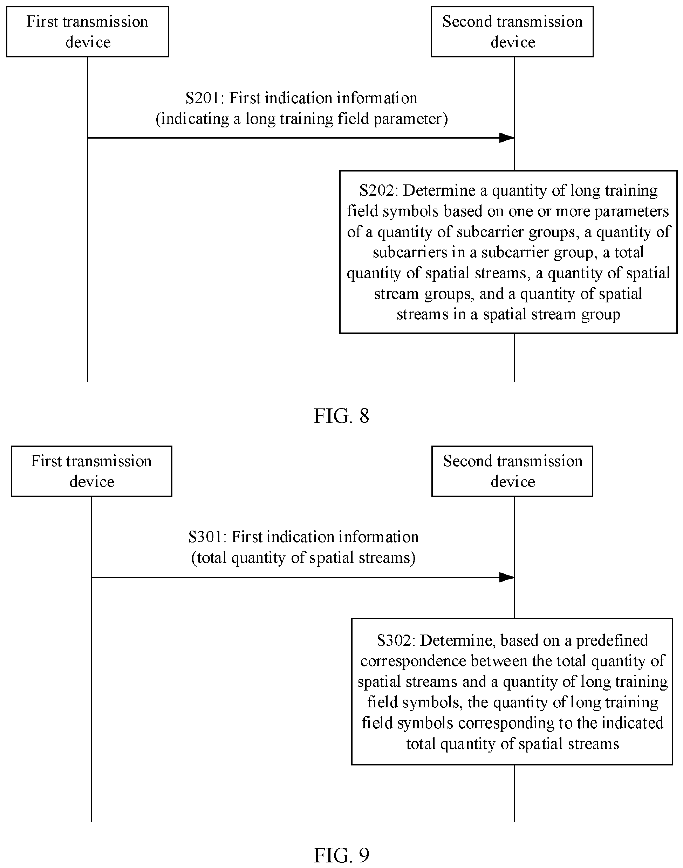

FIG. 8 is a still another schematic flowchart of a method for determining a transmission parameter according to an embodiment of this application. The method includes the following steps.

S201: A first transmission device sends first indication information.

Correspondingly, the second transmission device receives the first indication information.

The first indication information indicates an LTF parameter, and the LTF parameter includes one or more of the following parameters: a quantity of subcarrier groups, a quantity of subcarriers in a subcarrier group, a total quantity of spatial streams, a quantity of spatial stream groups, and a quantity of spatial streams in a spatial stream group.

This embodiment may be applied to 802.11ac, 802.11ax, 802.11be, a next-generation wireless local area network system thereof, and the like. The total quantity of spatial streams may be 8 or may be greater than 8. For example, in an 802.11be system, the total quantity of spatial streams is 16. When the total quantity of spatial streams increases, the quantity of LTF field symbols needs to be reduced. As described above, to reduce signaling overheads and reduce a latency of receiving a data field, a long training field used for channel estimation for distinguishing multiple spatial streams in a MIMO scenario is generated in a frequency domain transformation manner and a time domain transformation manner. Specifically, the first transmission device first performs frequency domain transformation on an LTF basic sequence to obtain the LTF symbols, and then performs time domain transformation on the LTF symbols to obtain the LTF field. Therefore, decreasing the signaling overheads is finally reflected in reduction in the quantity of LTF field symbols. The quantity of LTF field symbols may be determined based on one or more parameters of the quantity of subcarriers in a subcarrier group, the quantity of spatial streams in a spatial stream group, and the total quantity of spatial streams.

The first transmission device sends the first indication information to the second transmission device, where the first indication information indicates the LTF parameter. The first indication information may be carried in an extremely high throughput signal (EHT-SIG) in an EHT PPDU and a common field (common field) in an extremely high throughput trigger frame (EHT Trigger frame).

The first indication information may separately indicate the LTF parameters by using corresponding bits.

Indication of the quantity N_{g} of subcarriers in the subcarrier group:

The first indication information includes a first bit.

In an implementation, the first bit includes two bits, and a first value to a fourth value of the first bit respectively indicate that the quantity of subcarriers in a subcarrier group is 1 to 4. For example, when a value of the first bit is 0, it indicates that N_{g} = 1; when the value of the first bit is 1, it indicates that N_{g} = 2; when the value of the first bit is 2, it indicates that N_{g} = 3; when the value of the first bit is 3, it indicates that N_{g} = 4; and other bits are reserved. Certainly, the value of the first bit may alternatively be another value, indicating a different N_{g}. Details are shown in the following Table 7.

**Table 7**

| Bit value (2 bits) | N_{g} |
|---|---|
| 0 | 1 |
| 1 | 2 |
| 2 | 3 |
| 3 | 4 |

In still another implementation, the first bit includes four bits, and a first value to a sixteenth value of the first bit respectively indicate that the quantity of subcarriers in a subcarrier group is 1, 2, 3, 4, 5, 6, 7, 8, 9, 10, 11, 12, 13, 14, 15, and 16. For example, when a value of the first bit is 0, it indicates that N_{g} = 1; when the value of the first bit is 1, it indicates that N_{g} = 2; when the value of the first bit is 2, it indicates that N_{g} = 3; when the value of the first bit is 3, it indicates that N_{g} = 4; and the rest can be deduced by analogy. Details are shown in the following Table 8.

**Table 8**

| Bit value (4 bits) | N_{g} |
|---|---|
| 0 | 1 |
| 1 | 2 |
| 2 | 3 |
| ... | ... |
| 15 | 16 |

In still another implementation, a combination indication of N_{g} and whether subcarrier interpolation (or referred to as frequency domain frequency division multiplexing) is performed is considered.

The first bit includes two bits, and a first value of the first bit indicates that frequency domain frequency division multiplexing is not performed on the spatial streams in the spatial stream group, and that the quantity of subcarriers in a subcarrier group is 1;
a second value of the first bit indicates that frequency domain frequency division multiplexing is performed on the spatial streams in the spatial stream group, and that the quantity of subcarriers in a subcarrier group is 2; and
a third value of the first bit indicates that frequency domain frequency division multiplexing is performed on the spatial streams in the spatial stream group, and that the quantity of subcarriers in a subcarrier group is 4.

For example, when a value of the first bit is 0, it indicates that frequency domain multiplexing is not performed, and N_{g} = 1; when the value of the first bit is 1, it indicates that frequency domain multiplexing is performed, and N_{g} = 2; when the value of the first bit is 2, it indicates that frequency domain multiplexing is performed, and N_{g} = 4; and other bits are reserved. Details are shown in the following Table 9.

**Table 9**

| Bit value (2 bits) | Whether frequency domain frequency division multiplexing or frequency domain subcarrier interpolation is performed on the spatial streams in the spatial stream group | N_{g} |
|---|---|---|
| 0 | No | 1 |
| 1 | Yes | 2 |
| 2 | Yes | 4 |
| 3 | Reserved | Reserved |

In this way, only when receiving the first indication information, the second transmission device can learn whether the first transmission device performs frequency domain multiplexing and learn the quantity of subcarriers in a subcarrier group, to accurately receive a PPDU.

Indication of the total quantity of spatial streams:

The first indication information may further include a second bit, and the second bit includes four bits.

In an implementation, a first value to a ninth value of the second bit respectively indicate that the total quantity of spatial streams is 1, 2, 4, 6, 8, 10, 12, 14, and 16. For example, when a value of the second bit is 0, it indicates that the total quantity of spatial streams is 1; when the value of the second bit is 1, it indicates that the total quantity of spatial streams is 2; when the value of the second bit is 2, it indicates that the total quantity of spatial streams is 4; when the value of the second bit is 3, it indicates that the total quantity of spatial streams is 6; when the value of the second bit is 4, it indicates that the total quantity of spatial streams is 8; when the value of the second bit is 5, it indicates that the total quantity of spatial streams is 10; when the value of the second bit is 6, it indicates that the total quantity of spatial streams is 12; when the value of the second bit is 7, it indicates that the total quantity of spatial streams is 14; when the value of the second bit is 8, it indicates that the total quantity of spatial streams is 16; and other values are reserved. Details are shown in the following Table 10.

**Table 10**

| Bit value (4 bits) | Total quantity of spatial streams |
|---|---|
| 0 | 1 |
| 1 | 2 |
| 2 | 4 |
| 3 | 6 |
| 4 | 8 |
| 5 | 10 |
| 6 | 12 |
| 7 | 14 |
| 8 | 16 |
| Other values | Reserved |

Certainly, the foregoing is merely an example. Alternatively, the value of the second bit may be another value, indicating the total quantity of spatial streams.

In still another implementation, the second bit includes four bits, and a first value to a sixteenth value of the second bit respectively indicate that the total quantity of spatial streams is 1, 2, 3, 4, 5, 6, 7, 8, 9, 10, 11, 12, 13, 14, 15, and 16. For example, when the value of the second bit is 0, it indicates that the total quantity of spatial streams is 1; when the value of the second bit is 1, it indicates that the total quantity of spatial streams is 2; when the value of the second bit is 2, it indicates that the total quantity of spatial streams is 3; and the rest can be deduced by analogy. Details are shown in the following Table 11.

**Table 11**

| Bit value (4 bits) | Total quantity of spatial streams |
|---|---|
| 0 | 1 |
| 1 | 2 |
| 2 | 3 |
| 3 | 4 |
| ... | ... |
| 15 | 16 |

If a channel changes quickly, a Doppler characteristic of the channel needs to be considered. In the foregoing two implementations, the Doppler characteristic of the channel is not considered.

In still another implementation, if the Doppler characteristic is considered, the first indication information includes a second bit, and the second bit includes four bits;
a first value of the second bit indicates that the total quantity of spatial streams is 1, and a sending period of one long training field symbol is 10 symbols;
a second value of the second bit indicates that the total quantity of spatial streams is 2, and a sending period of two long training field symbols is 10 symbols;
a third value of the second bit indicates that the total quantity of spatial streams is 4, and a sending period of four long training field symbols is 10 symbols; and
a fourth value of the second bit indicates that the total quantity of spatial streams is 1, and a sending period of one long training field symbol is 20 symbols.

For example, when a value of the second bit is 0, the total quantity of spatial streams is 1, the one spatial stream is mapped to one LTF symbol, and a sending period of the one LTF symbol is 10 symbols, in other words, the LTF symbol is sent 10 times in one period. When the value of the second bit is 1, the total quantity of spatial streams is 2, the two spatial streams are mapped to two LTF symbols, and a sending period of the two LTF symbols is 10 symbols, in other words, the two LTF symbols are respectively sent five times in one period. When the value of the second bit is 2, the total quantity of spatial streams is 4, the four spatial streams are mapped to four LTF symbols, and a sending period of the four LTF symbols is 10 symbols, in other words, in one period, a first symbol is sent twice, a second symbol is sent twice, a third symbol is sent twice, a fourth symbol is sent twice, then the first symbol is sent twice, and the second symbol is sent twice in a next period.... When the value of the second bit is 4, the total quantity of spatial streams is 4, the four spatial streams are mapped to one LTF symbol, and a sending period of the one LTF symbol is 20 symbols, in other words, the one symbol is sent 20 times in one period. Details are shown in the following Table 12.

**Table 12**

| Bit value (4 bits) | Total quantity of spatial streams | Midamble periodicity |
|---|---|---|
| 0 | 1 | 10 symbols |
| 1 | 2 | 10 symbols |
| 2 | 4 | 10 symbols |
| 3 | Reserved | Reserved |
| 4 | 1 | 20 symbols |
| Other values | Reserved | Reserved |

The LTF parameter may further include a type of the long training field. The type of the long training field includes a time-frequency domain transformation type such as FDM and CDM. For example, the first indication information further includes a third bit, the third bit includes one bit, a first value of the third bit indicates that subcarrier interpolation is used in frequency domain and code division multiplexing is used in time domain, and a second value of the third bit indicates that code division multiplexing is used in frequency domain and code division multiplexing is used in time domain.

The third bit may alternatively include two bits, and indicates a combination of various manners of frequency domain multiplexing and time domain multiplexing.

In addition, a method for obtaining a spatial stream group parameter may be: in an AP coordination scenario, Nss_set (spatial stream group) is a quantity of APs participating in AP coordination. For example, if four APs participate in AP coordination, Nss_set may be determined to be 4 based on the quantity of APs, and correspondingly, N_{g} = 4. If three APs participate in transmission in AP coordination, N_{g} = 3. In a MU-MIMO scenario, Nss_set may be obtained based on a quantity of multiple users. For example, if there are three STAs in downlink MU-MIMO, N_{g} = 3. In a SU-MIMO scenario, Nss_set may be distinguished based on an antenna group or a stream group.

S202: The second transmission device determines the quantity of LTF field symbols based on one or more parameters of the quantity of subcarrier groups, the quantity of subcarriers in a subcarrier group, the total quantity of spatial streams, the quantity of spatial stream groups, and the quantity of spatial streams in a spatial stream group, where the quantity of LTF field symbols is less than or equal to 8.

After receiving the first indication information, the second transmission device obtains the one or more LTF parameters indicated by the first indication information, and may determine the quantity of LTF field symbols based on the one or more LTF parameters.

A size of a P matrix used to perform time domain transformation on the long training field corresponds to the quantity of long training field symbols. For example, if the quantity of long training field symbols is 10, the P matrix is P_{10 x 10}. For another example, if the quantity of long training field symbols is 16, the P matrix is P_{16 x 16}. The size of the P matrix may alternatively be determined based on one or more parameters of the quantity of subcarrier groups, the quantity of subcarriers in a subcarrier group, the total quantity of spatial streams, the quantity of spatial stream groups, and the quantity of spatial streams in a spatial stream group.

The long training field parameter further includes a type of the long training field, and the type of the long training field includes frequency domain FDM (or referred to as frequency domain subcarrier interpolation) and frequency domain CDM.

In the following, the quantity of LTF field symbols or the size of the P matrix is determined in an FDM manner and a CDM manner in frequency domain.

When the FDM manner is used in frequency domain, the quantity of subcarriers in a subcarrier group may be a preset (that is, fixed) value, or may be unfixed.

When the quantity of subcarriers in a subcarrier group is unfixed, a multiplexed spatial stream group is mapped to subcarriers based on multiplexing of spatial streams in the spatial stream group, to determine the quantity of subcarriers in a subcarrier group. Therefore, it is equivalent to that the quantity N_{g} of subcarriers in a subcarrier group is equal to a quantity of spatial stream groups that need to be distinguished in frequency domain. Therefore, in an implementation, S202 may include: determining the quantity N_{g} of subcarriers in a subcarrier group based on the quantity of spatial stream groups, and determining the quantity of LTF field symbols based on the total quantity N_{STS,total} of spatial streams and the quantity N_{g} of subcarriers in a subcarrier group. That is, the quantity N_{LTF} of LTF field symbols or the size of the P matrix satisfies the following formula (1): ${N}_{LTF} = the size of the P matrix = ceiling \left({N}_{STS , total}/{N}_{g}\right)$ Formula (1), where
ceiling means rounding up.

For example, when the total quantity N_{sts,total} of spatial streams is 16, and when the quantity M of spatial stream groups that need to be distinguished is 2, N_{g} = M = 2, and the quantity N_{LTF} of LTF field symbols or the size of the P matrix is equal to 8.

For another example, when the total quantity N_{sts,total} of spatial streams is 16, and when the spatial stream groups M that need to be distinguished is 3, N_{g} = M = 3, and the quantity N_{LTF} of LTF field symbols or the size of the P matrix is equal to 6.

It should be noted that the formula (1) may alternatively have other equivalent variations.

When the P matrix is selected, to be compatible with the 11ac and 11ax standards, it can be seen from Table 1 and Table 2 that sizes of the P matrix are only P_{4 x 4}, P_{6 x 6}, and P_{8 x 8}, and the size of the P matrix is determined according to the foregoing formula (1) may be an odd number or an even number. Therefore, when the P matrix is selected, the size of the selected P matrix should satisfy the following formula 2: $P = \left\{\begin{matrix}ceiling \left({N}_{STS , total}/{N}_{g}\right) + 1 if the size of the p matrix is an odd number \\ ceiling \left({N}_{STS , total}/{N}_{g}\right) if the size of the p matrix is an even number\end{matrix}\right.$ Formula (2)

It should be noted that the formula (2) may alternatively have other equivalent variations.

If the determined size of the P matrix is an odd number, the size of the selected P matrix is increased by 1. If the determined size of the P matrix is an even number, the P matrix corresponding to the determined size of the P matrix is selected.

In addition, the P matrix may alternatively be added. For example, a P matrix whose size is 3, 5, 7, or the like is added.

When the quantity of subcarriers in a subcarrier group is unfixed, the quantity N_{g} of subcarriers in a subcarrier group is equal to the quantity M of spatial streams in a spatial stream group, and S202 may alternatively be: determining the quantity of long training field symbols based on the total quantity of spatial streams and the quantity of spatial streams in a spatial stream group. That is, the quantity N_{LTF} of LTF field symbols or the size of the P matrix satisfies the following formula 3: ${N}_{LTF} = the size of the P matrix = ceiling \left({N}_{STS , total}/M\right)$ Formula (3), where
ceiling means rounding up.

It should be noted that the formula (3) may alternatively have other equivalent variations.

In still another implementation, if the first indication information indicates the total quantity of spatial streams and the quantity of spatial stream groups, when the quantity of subcarriers in a subcarrier group is unfixed, the multiplexed spatial stream group is mapped to a corresponding quantity of subcarriers based on multiplexing of the spatial streams in the spatial stream group. Therefore, it is equivalent to that the quantity N_{g} of subcarriers in a subcarrier group is equal to the quantity of spatial stream groups that need to be distinguished in frequency domain. Therefore, the quantity of long training field symbols may alternatively be determined based on the total quantity of spatial streams and the quantity of spatial stream groups.

In still another implementation, if the first indication information indicates the total quantity of spatial streams and the quantity of spatial streams in a spatial stream group, when the quantity of subcarriers in a subcarrier group is unfixed, the multiplexed spatial stream group is mapped to a corresponding quantity of subcarriers based on multiplexing of the spatial streams in the spatial stream group. Therefore, it is equivalent to that the quantity of subcarriers in a subcarrier group is equal to the quantity of spatial stream groups. Therefore, the quantity of spatial stream groups may alternatively be determined based on the total quantity of spatial streams and the quantity of spatial streams in a spatial stream group, and the quantity of long training field symbols may be determined based on the total quantity of spatial streams and the quantity of spatial stream groups.

When the quantity of subcarriers in a subcarrier group is fixed, in other words, N_{g} is a preset value, the quantity N_{g} of subcarriers in a subcarrier group may be equal to or not equal to the quantity M of spatial streams in a spatial stream group. S202 is: determining the quantity of long training field symbols based on the total quantity of spatial streams and the quantity of subcarriers in a subcarrier group. The quantity N_{LTF} of LTF field symbols or the size of the P matrix still satisfies the foregoing formula (1). However, in the formula (1), N_{g} is a fixed value.

For example, the total quantity of spatial streams is 13, N_{g} = 2, and the quantity (Nss_set) of stream groups that need to be spatially distinguished is 3. A quantity SS1 of spatial streams includes two streams, a quantity SS2 of spatial streams includes three streams, and a quantity SS3 of spatial streams includes eight streams. In this case, the size of the P matrix = ceiling(13/2)=7 or 8 is obtained according to the formula 1. When the P matrix is determined, the determined P matrix is a smallest value in sizes of candidate P matrices. For example, if 11ac and 11ax do not include a P matrix with a size of 7, but the P matrix with a size of 7 is added, a P_{7 x 7} P matrix may be selected. If to be compatible with the 11ac and 11ax standards, a minimum value of sizes of candidate P matrices is 8, and a P_{8 x 8} P matrix may be selected.

Still refer to the foregoing example. Because N_{g} is fixed to 2, the quantity SS1 of spatial streams and quantity SS2 of spatial streams may be carried on a first subcarrier, and the quantity SS3 of spatial streams may be carried on a second subcarrier. In this case, the first subcarrier carries five streams, and the second subcarrier carries eight streams. When the P matrix is selected, the size of the P matrix corresponds to a maximum quantity of spatial streams included in a spatial stream group. That is, in this example, the size of the P matrix corresponds to SS3, and a P_{8 x 8} P matrix is selected.

When the CDM manner is selected in frequency domain, S202 includes: determining at least one parameter of the quantity of spatial stream groups on which frequency domain code division multiplexing is performed and the quantity of subcarriers in a subcarrier group on which frequency domain code division multiplexing is performed; and determining the quantity of long training field symbols based on the total quantity of spatial streams and the quantity of spatial stream groups, or based on the total quantity of spatial streams and the quantity of subcarriers in a subcarrier group.

For example, the total quantity of spatial streams is 16, and two spatial stream groups need to be distinguished in frequency domain. In this case, the size of the P matrix selected in frequency domain is 2, that is, both subcarriers in odd-numbered bits and subcarriers in even-numbered bits transmit sequences of a same quantity of streams. To be specific, an orthogonal matrix whose P matrix size is 2 is used in frequency domain to distinguish first eight streams and second eight streams. In this case, the quantity of spatial stream groups is 2, and the quantity of subcarriers in a subcarrier group is also 2. In this case, the size of the P matrix in time domain is 16/2 = 8.

In the foregoing manner, when the total quantity of spatial streams increases, the quantity of long training field symbols is reduced, so that transmission overheads of a preamble of a PPDU can be decreased.

Further, when obtaining the LTF parameter, the first transmission device may configure the quantity of LTF symbols or the size of the P matrix. Specifically, in frequency domain, based on the quantity N_{g}, a group of specified LTF basic sequences (a length of the basic sequence is L) are mapped into an LTF field with a length of N_{g} x L in frequency domain. Then, in time domain, based on the quantity of streams to be distinguished, each LTF symbol is multiplied by a row of the P matrix based on the quantity of streams, so that all streams are orthogonal in frequency domain and time domain. The first transmission device sends a data frame to the second transmission device, where the data frame carries the LTF field.

When receiving the data frame, the second transmission device learns, based on the LTF type in the received PPDU, the total quantity of streams, and a value of N_{g}, that the second transmission device needs to parse which streams on which subcarriers.

In this embodiment, the first transmission device may be an AP, and the second transmission device is a STA. The first transmission device may alternatively be a STA, and the second transmission device may alternatively be an AP. The first transmission device and the second transmission device are not specifically limited in this embodiment.

In 802.11be, a quantity of streams is increased to 16. If a 1x LTF type is used, a symbol length of one LTF is 3.2 µs, and an LTF field has an OFDM symbol length of 16 x 3.2 µs. In this case, a transmission time of a preamble increases. However, if a 4x HE-LTF type is used, a symbol length of one LTF is 12.8 µs, and an OFDM symbol length of 16 x 12.8 µs is required. In this case, a transmission time of the preamble is very long, and transmission efficiency of the preamble is very low. According to the solution in this embodiment, the quantity of long training field symbols is determined based on the total quantity of spatial streams, the quantity of spatial stream groups, and the quantity of subcarriers in a subcarrier group. The quantity of long training field symbols is reduced, so that redundancy of the preamble of the PPDU can be reduced and transmission overheads can be decreased.

According to the method for determining a transmission parameter provided in this embodiment of this application, the first transmission device indicates the long training field parameter, and the second transmission device determines the quantity of long training field symbols based on the indicated long training field parameter. The quantity of long training field symbols is reduced, so that redundancy of the preamble of the PPDU is reduced and the transmission overheads are decreased.

The embodiment shown in FIG. 8 may be applied to a 2x LTF or 4x LTF. Certainly, when this embodiment is applied to the 4x LTF, more transmission overheads of the preamble of the PPDU can be decreased. However, when a symbol of a relatively small LTF, such as a 1x or 2x LTF, is used, frequency domain frequency division multiplexing or code division multiplexing may not be performed in frequency domain, that is, subcarrier grouping and subcarrier interpolation are not performed. Details are shown in the following embodiments.

FIG. 9 is a still another schematic flowchart of a method for determining a transmission parameter according to an embodiment of this application. The method may include the following steps.

S301: A first transmission device sends first indication information.

Correspondingly, the second transmission device receives the first indication information.

The first indication information indicates a total quantity of spatial streams. There is a predefined correspondence between the total quantity of spatial streams and a quantity of long training field symbols.

Specifically, the predefined correspondence includes one or more of the following correspondences:
the total quantity of spatial streams is 1, 2, 3, or 4, and the quantity of long training field symbols is 4;
the total quantity of spatial streams is 5 or 6, and the quantity of long training field symbols is 6;
the total quantity of spatial streams is 7 or 8, and the quantity of long training field symbols is 8;
the total quantity of spatial streams is 9 or 10, and the quantity of long training field symbols is 10;
the total quantity of spatial streams is 11 or 12, and the quantity of long training field symbols is 12;
the total quantity of spatial streams is 13 or 14, and the quantity of long training field symbols is 14; and
the total quantity of spatial streams is 15 or 16, and the quantity of long training field symbols is 16.

That is, the predefined correspondences are shown in the following Table 13.

**Table 13**

| *N_{STS,total}* | *N_{EHT-LTF}*/P matrix size |
|---|---|
| 1, 2, 3,or 4 | 4/P_{4 x 4} |
| 5 or 6 | 6/P_{6 x 6} |
| 7 or 8 | 8/P_{8 x 8} |
| 9 or 10 | 10/*P*_{10 × 10} |
| 11 or 12 | 12/*P*_{12 × 12} |
| 13 or 14 | 14/*P*_{14 × 14} |
| 15 or 16 | 16/*P*_{16 × 16} |

Based on a P matrix proposed in 11ac or 11ax, the P matrix may be extended to sizes of 10, 12, 14, and 16 by using a method such as Fourier transform.

S302: The second transmission device determines, based on the predefined correspondence between the total quantity of spatial streams and the quantity of long training field symbols, the quantity of long training field symbols corresponding to the indicated total quantity of spatial streams.

A symbol length of a long training field is a first symbol length or a second symbol length, the total quantity of spatial streams is greater than 8, and the quantity of long training field symbols is less than or equal to 16.

If the second transmission device prestores or pre-configures the correspondence, when receiving the total quantity of spatial streams indicated by the first indication information, the second transmission device may obtain, based on the correspondence, the quantity of LTF symbols or the size of the P matrix corresponding to the indicated total quantity of spatial streams.

A 1x or 2x LTF is used, a transmission time of LTF symbols is relatively short. For 1x, a symbol length of one LTF is 3.2 µs. For 2x, a symbol length of one LTF is 6.4 µs. Therefore, the transmission time of the LTF symbols is shortened, to reduce redundancy of a preamble of a PPDU and decrease transmission overheads.

According to the method for determining a transmission parameter provided in this embodiment of this application, the quantity of LTF symbols corresponding to the indicated total quantity of spatial streams may be determined based on the predefined correspondence between the total quantity of spatial streams and the quantity of long training field symbols. The transmission time of the LTF symbols is relatively short, to reduce redundancy of the preamble of the PPDU and decrease the transmission overheads.

It can be learned from the descriptions of the foregoing plurality of embodiments that:
the total quantity of spatial streams is less than or equal to 8, and the quantity of long training field symbols is less than or equal to 8;
the total quantity of spatial streams is greater than 8, the symbol length of the long training field is the first symbol length or the second symbol length, and the quantity of long training field symbols is less than or equal to 16; and
the total quantity of spatial streams is greater than 8, the symbol length of the long training field is the second symbol length or a third symbol length, and the quantity of long training field symbols is less than or equal to 8.

According to the solution in this embodiment, an appropriate symbol length of the long training field may be determined based on different total quantities of spatial streams or different symbol lengths of a long training field, to reduce redundancy of the preamble of the PPDU and decrease the transmission overheads.

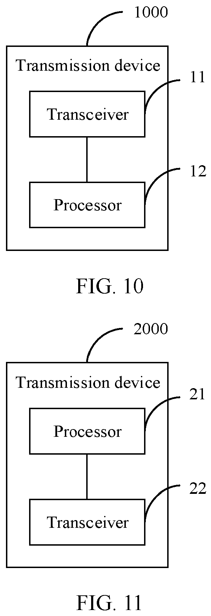

Based on a same idea as the foregoing method for determining a transmission parameter, an embodiment of this application further provides a transmission device. As shown in FIG. 10, a transmission device 1000 includes a transceiver 11 and a processor 12.

The transceiver 11 is configured to receive first indication information, where the first indication information indicates a quantity of long training field symbols, the quantity of long training field symbols is predetermined based on one or more long training field parameters of a quantity of subcarrier groups, a quantity of subcarriers in a subcarrier group, a total quantity of spatial streams, a quantity of spatial stream groups, and a quantity of spatial streams in a spatial stream group; the total quantity of spatial streams is greater than 8, and the quantity of long training field symbols is less than or equal to 8.

The transceiver 11 is further configured to receive a first data frame, where the first data frame includes a long training field.

The processor 12 configured to process the long training field based on the quantity of long training field symbols.

For specific implementations of the transceiver 11 and the processor 12, refer to related descriptions of the second transmission device in the embodiment shown in FIG. 5.

According to the transmission device provided in this embodiment of this application, the predefined quantity of long training field symbols is reduced, so that redundancy of a preamble of a PPDU can be reduced and transmission overheads can be decreased.

Based on a same idea as the foregoing method for determining a transmission parameter, an embodiment of this application further provides a transmission device. As shown in FIG. 11, the transmission device 2000 includes a processor 21 and a transceiver 22.

The processor 21 is configured to generate first indication information based on one or more long training field parameters of a quantity of subcarrier groups, a quantity of subcarriers in a subcarrier group, a total quantity of spatial streams, a quantity of spatial stream groups, and a quantity of spatial streams in a spatial stream group, where the first indication information indicates a quantity of long training field symbols, the quantity of long training field symbols is predefined, the total quantity of spatial streams is greater than 8, and the quantity of long training field symbols is less than or equal to 8.

The transceiver 22 is configured to send the first indication information.

For specific implementations of the processor 21 and the transceiver 22, refer to related descriptions of the first transmission device in the embodiment shown in FIG. 5.

According to the transmission device provided in this embodiment of this application, the predefined quantity of long training field symbols is reduced, so that redundancy of a preamble of a PPDU can be reduced and transmission overheads can be decreased. In addition, the first transmission device indicates the predefined quantity of long training field symbols, and there is no need to calculate the quantity of long training field symbols, reducing processing resources of the first transmission device.

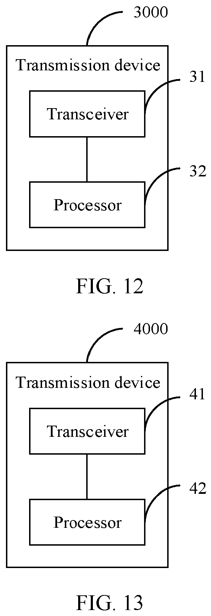

Based on a same idea as the foregoing method for determining a transmission parameter, an embodiment of this application further provides a transmission device. As shown in FIG. 12, the transmission device 3000 includes a transceiver 31 and a processor 32.

The transceiver 31 is configured to receive first indication information, where the first indication information indicates a long training field parameter, and the long training field parameter includes one or more of the following parameters: a quantity of subcarrier groups, a quantity of subcarriers in a subcarrier group, a total quantity of spatial streams, a quantity of spatial stream groups, and a quantity of spatial streams in a spatial stream group.

The processor 32 is configured to determine a quantity of long training field symbols based on one or more parameters of the quantity of subcarrier groups, the quantity of subcarriers in a subcarrier group, the total quantity of spatial streams, the quantity of spatial stream groups, and the quantity of spatial streams in a spatial stream group, where the quantity of long training field symbols is less than or equal to 8.

In an implementation, the processor 32 is configured to:
determine the quantity of long training field symbols based on the total quantity of spatial streams and the quantity of spatial stream groups; or
determine the quantity of spatial stream groups based on the total quantity of spatial streams and the quantity of spatial streams in a spatial stream group; and
determine the quantity of long training field symbols based on the total quantity of spatial streams and the quantity of spatial stream groups.

In still another implementation, the processor 32 is configured to:
determine the quantity of subcarriers in a subcarrier group based on the quantity of spatial stream groups; or determine the quantity of subcarriers in a subcarrier group based on the total quantity of spatial streams and the quantity of spatial streams in a spatial stream group; and
determine the quantity of long training field symbols based on the total quantity of spatial streams and the quantity of subcarriers in a subcarrier group.

In still another implementation, the quantity of subcarriers in a subcarrier group is a preset value.

The processor 32 is configured to determine the quantity of long training field symbols based on the total quantity of spatial streams and the quantity of subcarriers in a subcarrier group.

In still another implementation, the processor 32 is configured to:
determine a size of a P matrix based on the quantity of long training field symbols, where the size of the P matrix is a smallest value in sizes of candidate P matrices.

In still another implementation, the processor 32 is configured to:
determine the quantity of spatial streams in a spatial stream group based on the total quantity of spatial streams and the predefined quantity of subcarriers in a subcarrier group; and
determine the size of the P matrix based on the quantity of spatial streams in a spatial stream group, where the size of the P matrix corresponds to a maximum quantity of spatial streams included in a spatial stream group.

In still another implementation, the processor 32 is configured to:
determine at least one parameter of the quantity of spatial stream groups on which frequency domain code division multiplexing is performed and the quantity of subcarriers in a subcarrier group on which frequency domain code division multiplexing is performed; and
determine the quantity of long training field symbols based on the total quantity of spatial streams and the quantity of spatial stream groups, or based on the total quantity of spatial streams and the quantity of subcarriers in a subcarrier group.

For specific implementations of the transceiver 31 and the processor 32, refer to related descriptions of the second transmission device in the embodiment shown in FIG. 8.

According to the transmission device provided in this embodiment of this application, the first transmission device indicates the long training field parameter, and the second transmission device determines the quantity of long training field symbols based on the indicated long training field parameter. The quantity of long training field symbols is reduced, so that redundancy of a preamble of a PPDU is reduced and transmission overheads are decreased.

Based on a same idea as the foregoing method for determining a transmission parameter, an embodiment of this application further provides a transmission device. As shown in FIG. 13, the transmission device 4000 includes a transceiver 41 and a processor 42.

The transceiver 41 is configured to send first indication information, where the first indication information indicates a long training field parameter, and the long training field parameter includes one or more of the following parameters: a quantity of subcarrier groups, a quantity of subcarriers in a subcarrier group, a total quantity of spatial streams, a quantity of spatial stream groups, and a quantity of spatial streams in a spatial stream group.

The processor 42 is configured to determine a quantity of long training field symbols based on one or more parameters of the quantity of subcarrier groups, the quantity of subcarriers in a subcarrier group, the total quantity of spatial streams, the quantity of spatial stream groups, and the quantity of spatial streams in a spatial stream group, where the quantity of long training field symbols is less than or equal to 8.

In an implementation, the processor 42 is configured to:
determine the quantity of long training field symbols based on the total quantity of spatial streams and the quantity of spatial stream groups; or
determine the quantity of spatial stream groups based on the total quantity of spatial streams and the quantity of spatial streams in a spatial stream group; and
determine the quantity of long training field symbols based on the total quantity of spatial streams and the quantity of spatial stream groups.

In still another implementation, the processor 42 is configured to:
determine the quantity of subcarriers in a subcarrier group based on the quantity of spatial stream groups; or determine the quantity of subcarriers in a subcarrier group based on the total quantity of spatial streams and the quantity of spatial streams in a spatial stream group; and
determine the quantity of long training field symbols based on the total quantity of spatial streams and the quantity of subcarriers in a subcarrier group.

In still another implementation, the quantity of subcarriers in a subcarrier group is a preset value.

The processor 42 is configured to determine the quantity of long training field symbols based on the total quantity of spatial streams and the quantity of subcarriers in a subcarrier group.

In still another implementation, the processor 42 is configured to:
determine a size of a P matrix based on the quantity of long training field symbols, where the size of the P matrix is a smallest value in sizes of candidate P matrices.

In still another implementation, the processor 42 is configured to:
determine the quantity of spatial streams in a spatial stream group based on the total quantity of spatial streams and the predefined quantity of subcarriers in a subcarrier group; and
determine the size of the P matrix based on the quantity of spatial streams in a spatial stream group, where the size of the P matrix corresponds to a maximum quantity of spatial streams included in a spatial stream group.

In still another implementation, the processor 42 is configured to:
determine at least one parameter of the quantity of spatial stream groups on which frequency domain code division multiplexing is performed and the quantity of subcarriers in a subcarrier group on which frequency domain code division multiplexing is performed; and
determine the quantity of long training field symbols based on the total quantity of spatial streams and the quantity of spatial stream groups, or based on the total quantity of spatial streams and the quantity of subcarriers in a subcarrier group.

For specific implementations of the transceiver 41 and the processor 42, refer to related descriptions of the first transmission device in the embodiment shown in FIG. 8.

According to the transmission device provided in this embodiment of this application, the first transmission device indicates the long training field parameter, and the second transmission device determines the quantity of long training field symbols based on the indicated long training field parameter. The quantity of long training field symbols is reduced, so that redundancy of a preamble of a PPDU is reduced and transmission overheads are decreased.

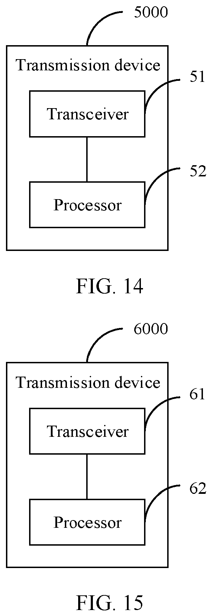

Based on a same idea as the foregoing method for determining a transmission parameter, an embodiment of this application further provides a transmission device. As shown in FIG. 14, the transmission device 5000 includes a transceiver 51 and a processor 52.

The transceiver 52 is configured to receive first indication information, where the first indication information indicates a total quantity of spatial streams.

The processor 52 is configured to determine, based on a predefined correspondence between the total quantity of spatial streams and a quantity of long training field symbols, the quantity of long training field symbols corresponding to the indicated total quantity of spatial streams, where a symbol length of a long training field is a first symbol length or a second symbol length, the total quantity of spatial streams is greater than 8, and the quantity of long training field symbols is less than or equal to 16.

For specific implementations of the transceiver 51 and the processor 52, refer to related descriptions of the second transmission device in the embodiment shown in FIG. 9.

According to the transmission device provided in this embodiment of this application, the quantity of LTF symbols corresponding to the indicated total quantity of spatial streams may be determined based on the predefined correspondence between the total quantity of spatial streams and the quantity of long training field symbols. A transmission time of the LTF symbols is relatively short, to reduce redundancy of a preamble of a PPDU and decrease transmission overheads.

Based on a same idea as the foregoing method for determining a transmission parameter, an embodiment of this application further provides a transmission device. As shown in FIG. 15, the transmission device 6000 includes a transceiver 61 and a processor 62.

The transceiver 61 is configured to send first indication information, where the first indication information indicates a total quantity of spatial streams.

The processor 62 is configured to determine, based on a predefined correspondence between the total quantity of spatial streams and a quantity of long training field symbols, the quantity of long training field symbols corresponding to the indicated total quantity of spatial streams, where a symbol length of a long training field is a first symbol length or a second symbol length, the total quantity of spatial streams is greater than 8, and the quantity of long training field symbols is less than or equal to 16.

For specific implementations of the transceiver 61 and the processor 62, refer to related descriptions of the first transmission device in the embodiment shown in FIG. 9.

According to the transmission device provided in this embodiment of this application, the quantity of LTF symbols corresponding to the indicated total quantity of spatial streams may be determined based on the predefined correspondence between the total quantity of spatial streams and the quantity of long training field symbols. A transmission time of the LTF symbols is relatively short, to reduce redundancy of a preamble of a PPDU and decrease transmission overheads.

An embodiment of this application further provides a transmission system, including the foregoing first transmission device and the foregoing second transmission device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid state disk, SSD).

## Claims

1. A method performed by a second transmission device for processing a long training field, the method comprising:
receiving (S201) first indication information sent by a first transmission device, wherein the first indication information comprises a fourth bit field which indicates a quantity of long training field symbols wherein;
a first value of the fourth bit field indicates that the quantity of long training field symbols is 1 and a sending period of one long training field symbol is 10 symbols;
a second value of the fourth bit field indicates that the quantity of long training field symbols is 2 and a sending period of two long training field symbols is 10 symbols;
a third value of the fourth bit field indicates that the quantity of long training field symbols is 4 and a sending period of four long training field symbols is 10 symbols; and
a fourth value of the fourth bit field indicates that the quantity of long training field symbols is 1 and a sending period of one long training field symbol is 20 symbols; wherein
the quantity of long training field symbols is predetermined by the first transmission device for the second transmission device based on one or more long training field parameters of a quantity of subcarrier groups, a quantity of subcarriers in a subcarrier group, a total quantity of spatial streams, a quantity of spatial stream groups, and a quantity of spatial streams in a spatial stream group; the total quantity of spatial streams is greater than 8, and the quantity of long training field symbols is less than or equal to 8, and wherein the long training field symbols are generated by the second transmission device through matrix mapping of a P matrix, and a size of the P matrix corresponds to the indicated quantity of long training field symbols;
wherein the first indication information further indicates to the second transmission device at least one or more of the long training field parameters that are used to predetermine the quantity of long training field symbols by the first transmission device;
receiving a first data frame sent by the first transmission device, wherein the first data frame comprises a long training field; and
processing the long training field based on the quantity of long training field symbols and the P matrix to obtain a long training basic sequence that is used for channel estimation.

2. A method performed by a first transmission device for generating transmission parameter indication information the method comprising:
generating first indication information by the first transmission device, wherein the first indication information indicates a quantity of long training field symbols, , and comprises a fourth bit field wherein:
a first value of the fourth bit field indicates that the quantity of long training field symbols is 1 and a sending period of one long training field symbol is 10 symbols;
a second value of the fourth bit field indicates that the quantity of long training field symbols is 2 and a sending period of two long training field symbols is 10 symbols;
a third value of the fourth bit field indicates that the quantity of long training field symbols is 4 and a sending period of four long training field symbols is 10 symbols; and
a fourth value of the fourth bit field indicates that the quantity of long training field symbols is 1 and a sending period of one long training field symbol is 20 symbols
the quantity of long training field symbols is predetermined by the first transmission device based on one or more long training field parameters of a quantity of subcarrier groups, a quantity of subcarriers in a subcarrier group, a total quantity of spatial streams, a quantity of spatial stream groups, and a quantity of spatial streams in a spatial stream group; the total quantity of spatial streams is greater than 8, and the quantity of long training field symbols is less than or equal to 8, and wherein the long training field symbols are generated by a second transmission device through matrix mapping of a P matrix, and a size of the P matrix corresponds to the indicated quantity of long training field symbols ; wherein the first indication information further indicates to the second transmission device at least one or more of the long training field parameters that are used to determine the quantity of long training field symbols by the first transmission device; and
sending by the first transmission device the first indication information.

3. A transmission device, wherein the device is configured to implement the method according to claim 1.

4. A transmission device, wherein the device is configured to implement the method according to claim 2.

5. A transmission device according to claim 3, the transmission device comprising a processor, wherein the processor is coupled to a memory comprising instructions which, when executed by the processor, cause the processor to carry out the method according to claim 1.

6. A transmission device according to claim 4, the transmission device comprising a processor, wherein the processor is coupled to a memory comprising instructions which, when executed by the processor, cause the processor to carry out the method according to claim 2.

7. A computer-readable storage medium, wherein the computer-readable storage medium stores a computer program, comprising instructions which, when executed by the computer, cause the computer to carry out the method of claim 1 to 2.

8. A computer program product, comprising instructions which, when the program is executed by a computer, cause the computer to carry out the method according to any one of claims 1 to 2.

## Patentansprüche

1. Verfahren, das von einer zweiten Übertragungsvorrichtung zum Verarbeiten von langen Trainingsfeldern durchgeführt wird, wobei das Verfahren umfasst:
Empfangen (S201) von ersten Anzeigeinformationen, die von einer ersten Übertragungsvorrichtung gesendet werden, wobei die ersten Anzeigeinformationen ein viertes Bitfeld umfassen, das eine Anzahl von Symbolen für lange Trainingsfelder anzeigt, wobei:
ein erster Wert des vierten Bitfelds anzeigt, dass die Anzahl von Symbolen für lange Trainingsfelder 1 ist und ein Sendezeitraum von einem Symbol für lange Trainingsfelder 10 Symbole beträgt;
ein zweiter Wert des vierten Bitfelds anzeigt, dass die Anzahl von Symbolen für lange Trainingsfelder 2 ist und ein Sendezeitraum von zwei Symbolen für lange Trainingsfelder 10 Symbole beträgt;
ein dritter Wert des vierten Bitfelds anzeigt, dass die Anzahl von Symbolen für lange Trainingsfelder 4 ist und ein Sendezeitraum von vier Symbolen für lange Trainingsfelder 10 Symbole beträgt; und
ein vierter Wert des vierten Bitfelds anzeigt, dass die Anzahl von Symbolen für lange Trainingsfelder 1 ist und ein Sendezeitraum von einem Symbol für lange Trainingsfelder 20 Symbole beträgt; wobei
die Anzahl von Symbolen für lange Trainingsfelder durch die erste Übertragungsvorrichtung für die zweite Übertragungsvorrichtung basierend auf einem oder mehreren Parametern für lange Trainingsfelder einer Anzahl von Teilträgergruppen, einer Anzahl von Teilträgern in einer Teilträgergruppe, einer Gesamtanzahl von räumlichen Datenströmen, einer Anzahl von räumlichen Datenstromgruppen und einer Anzahl von räumlichen Datenströmen in einer räumlichen Datenstromgruppe vorab ermittelt wird; wobei die Gesamtanzahl von räumlichen Datenströmen größer als 8 ist und die Anzahl von Symbolen für lange Trainingsfelder kleiner als oder gleich 8 ist, und wobei die Symbole für lange Trainingsfelder durch die zweite Übertragungsvorrichtung durch eine Matrixzuordnung einer P-Matrix erzeugt werden und wobei eine Größe der P-Matrix der angezeigten Anzahl von Symbolen für lange Trainingsfelder entspricht;
wobei die ersten Anzeigeinformationen der zweiten Übertragungsvorrichtung ferner mindestens einen oder mehrere der Parameter für lange Trainingsfelder anzeigen, die verwendet werden, um die Anzahl von Symbolen für lange Trainingsfelder durch die erste Übertragungsvorrichtung vorab zu ermitteln;
Empfangen eines ersten Datenframes, der von der ersten Übertragungsvorrichtung gesendet wird, wobei der erste Datenframe ein langes Trainingsfeld umfasst; und
Verarbeiten des langen Trainingsfelds basierend auf der Anzahl von Symbolen für lange Trainingsfelder und der P-Matrix, um eine lange grundlegende Trainingssequenz zu erhalten, die für eine Kanalschätzung verwendet wird.

2. Verfahren, das von einer ersten Übertragungsvorrichtung zum Erzeugen von Anzeigeinformationen für Übertragungsparameter durchgeführt wird, wobei das Verfahren umfasst:
Erzeugen von ersten Anzeigeinformationen durch die erste Übertragungsvorrichtung, wobei die ersten Anzeigeinformationen eine Anzahl von Symbolen für lange Trainingsfelder anzeigen und ein viertes Bitfeld umfassen, wobei:
ein erster Wert des vierten Bitfelds anzeigt, dass die Anzahl von Symbolen für lange Trainingsfelder 1 ist und ein Sendezeitraum von einem Symbol für lange Trainingsfelder 10 Symbole beträgt;
ein zweiter Wert des vierten Bitfelds anzeigt, dass die Anzahl von Symbolen für lange Trainingsfelder 2 ist und ein Sendezeitraum von zwei Symbolen für lange Trainingsfelder 10 Symbole beträgt;
ein dritter Wert des vierten Bitfelds anzeigt, dass die Anzahl von Symbolen für lange Trainingsfelder 4 ist und ein Sendezeitraum von vier Symbolen für lange Trainingsfelder 10 Symbole beträgt; und
ein vierter Wert des vierten Bitfelds anzeigt, dass die Anzahl von Symbolen für lange Trainingsfelder 1 ist und ein Sendezeitraum von einem Symbol für lange Trainingsfelder 20 Symbole beträgt;
die Anzahl von Symbolen für lange Trainingsfelder durch die erste Übertragungsvorrichtung basierend auf einem oder mehreren Parametern für lange Trainingsfelder einer Anzahl von Teilträgergruppen, einer Anzahl von Teilträgern in einer Teilträgergruppe, einer Gesamtanzahl von räumlichen Datenströmen, einer Anzahl von räumlichen Datenstromgruppen und einer Anzahl von räumlichen Datenströmen in einer räumlichen Datenstromgruppe vorab ermittelt wird; wobei die Gesamtanzahl von räumlichen Datenströmen größer als 8 ist und die Anzahl von Symbolen für lange Trainingsfelder kleiner als oder gleich 8 ist, und wobei die Symbole für lange Trainingsfelder durch eine zweite Übertragungsvorrichtung durch eine Matrixzuordnung einer P-Matrix erzeugt werden und wobei eine Größe der P-Matrix der angezeigten Anzahl von Symbolen für lange Trainingsfelder entspricht; wobei die ersten Anzeigeinformationen der zweiten Übertragungsvorrichtung ferner mindestens einen oder mehrere der Parameter für lange Trainingsfelder anzeigen, die verwendet werden, um die Anzahl von Symbolen für lange Trainingsfelder durch die erste Übertragungsvorrichtung zu ermitteln; und
Senden, durch die erste Übertragungsvorrichtung, der ersten Anzeigeinformationen.

3. Übertragungsvorrichtung, wobei die Vorrichtung konfiguriert ist, um das Verfahren nach Anspruch 1 zu implementieren.

4. Übertragungsvorrichtung, wobei die Vorrichtung konfiguriert ist, um das Verfahren nach Anspruch 2 zu implementieren.

5. Übertragungsvorrichtung nach Anspruch 3, wobei die Übertragungsvorrichtung einen Prozessor umfasst, wobei der Prozessor mit einem Speicher gekoppelt ist, der Anweisungen umfasst, die, wenn sie von dem Prozessor ausgeführt werden, den Prozessor veranlassen, das Verfahren nach Anspruch 1 auszuführen.

6. Übertragungsvorrichtung nach Anspruch 4, wobei die Übertragungsvorrichtung einen Prozessor umfasst, wobei der Prozessor mit einem Speicher gekoppelt ist, der Anweisungen umfasst, die, wenn sie von dem Prozessor ausgeführt werden, den Prozessor veranlassen, das Verfahren nach Anspruch 2 auszuführen.

7. Computerlesbares Speichermedium, wobei in dem computerlesbaren Speichermedium ein Computerprogramm gespeichert ist, das Anweisungen umfasst, die, wenn sie von dem Computer ausgeführt werden, den Computer veranlassen, das Verfahren nach einem der Ansprüche 1 bis 2 auszuführen.

8. Computerprogrammprodukt, das Anweisungen umfasst, die, wenn das Programm von einem Computer ausgeführt wird, den Computer veranlassen, das Verfahren nach einem der Ansprüche 1 bis 2 auszuführen.

## Revendications

1. Procédé effectué par un deuxième dispositif de transmission pour le traitement d'un champ d'apprentissage long, le procédé comprenant :
la réception (S201) de premières informations d'indication envoyées par un premier dispositif de transmission, les premières informations d'indication comprenant un quatrième champ de bits qui indique une quantité de symboles de champ d'apprentissage long dans lequel :
une première valeur du quatrième champ de bits indique que la quantité de symboles de champ d'apprentissage long est de 1 et qu'une période d'envoi d'un symbole de champ d'apprentissage long est de 10 symboles ;
une deuxième valeur du quatrième champ de bits indique que la quantité de symboles de champ d'apprentissage long est de 2 et qu'une période d'envoi de deux symboles de champ d'apprentissage long est de 10 symboles ;
une troisième valeur du quatrième champ de bits indique que la quantité de symboles de champ d'apprentissage long est de 4 et qu'une période d'envoi de quatre symboles de champ d'apprentissage long est de 10 symboles ; et
une quatrième valeur du quatrième champ de bits indique que la quantité de symboles de champ d'apprentissage long est de 1 et qu'une période d'envoi d'un symbole de champ d'apprentissage long est 20 symboles ; dans lequel
la quantité de symboles de champ d'apprentissage long est prédéterminée par le premier dispositif de transmission pour le deuxième dispositif de transmission sur la base d'un ou plusieurs paramètres de champ d'apprentissage long d'une quantité de groupes de sous-porteuses, d'une quantité de sous-porteuses dans un groupe de sous-porteuses, d'une quantité totale de flux spatiaux, d'une quantité de groupes de flux spatiaux et d'une quantité de flux spatiaux dans un groupe de flux spatiaux ; la quantité totale de flux spatiaux est supérieure à 8, et la quantité de symboles de champ d'apprentissage long est inférieure ou égale à 8, et les symboles de champ d'apprentissage long étant générés par le deuxième dispositif de transmission par mise en correspondance matriciel d'une matrice P, et une taille de la matrice P correspondant à la quantité indiquée de symboles de champ d'apprentissage long ;
dans lequel les premières informations d'indication indiquent en outre au deuxième dispositif de transmission au moins un ou plusieurs des paramètres de champ d'apprentissage long qui sont utilisés pour prédéterminer la quantité de symboles de champ d'apprentissage long par le premier dispositif de transmission ;
la réception d'une première trame de données envoyée par le premier dispositif de transmission, la première trame de données comprenant un champ d'apprentissage long, et
le traitement du champ d'apprentissage long sur la base de la quantité de symboles de champ d'apprentissage long et de la matrice P pour obtenir une séquence de base d'apprentissage long qui est utilisée pour l'estimation de canal.

2. Procédé effectué par un premier dispositif de transmission, pour générer des informations d'indication de paramètres de transmission le procédé comprenant :
la génération de premières informations d'indication par le premier dispositif de transmission, les premières informations d'indication indiquant une quantité de symboles de champ d'apprentissage long, et comprenant un quatrième champ de bits dans lequel :
une première valeur du quatrième champ de bits indique que la quantité de symboles de champ d'apprentissage long est de 1 et qu'une période d'envoi d'un symbole de champ d'apprentissage long est de 10 symboles ;
une deuxième valeur du quatrième champ de bits indique que la quantité de symboles de champ d'apprentissage long est de 2 et qu'une période d'envoi de deux symboles de champ d'apprentissage long est de 10 symboles ;
une troisième valeur du quatrième champ de bits indique que la quantité de symboles de champ d'apprentissage long est de 4 et qu'une période d'envoi de quatre symboles de champ d'apprentissage long est de 10 symboles ; et
une quatrième valeur du quatrième champ de bits indique que la quantité de symboles de champ d'apprentissage long est de 1 et qu'une période d'envoi d'un symbole de champ d'apprentissage long est de 20 symboles
la quantité de symboles de champ d'apprentissage long est prédéterminée par le premier dispositif de transmission sur la base d'un ou plusieurs paramètres de champ d'apprentissage long d'une quantité de groupes de sous-porteuses, d'une quantité de sous-porteuses dans un groupe de sous-porteuses, d'une quantité totale de flux spatiaux, d'une quantité de groupes de flux spatiaux et d'une quantité de flux spatiaux dans un groupe de flux spatiaux ; la quantité totale de flux spatiaux est supérieure à 8, et la quantité de symboles de champ d'apprentissage long est inférieure ou égale à 8, et les symboles de champ d'apprentissage long étant générés par un deuxième dispositif de transmission par mise en correspondance matriciel d'une matrice P, et une taille de la matrice P correspondant à la quantité indiquée de symboles de champ d'apprentissage long ; dans lequel les premières informations d'indication indiquent en outre au deuxième dispositif de transmission au moins un ou plusieurs des paramètres de champ d'apprentissage long qui sont utilisés pour déterminer la quantité de symboles de champ d'apprentissage long par le premier dispositif de transmission ; et
l'envoi, par le premier dispositif de transmission, des premières informations d'indication.

3. Dispositif de transmission, dans lequel le dispositif est configuré pour mettre en œuvre le procédé selon la revendication 1.

4. Dispositif de transmission, dans lequel le dispositif est configuré pour mettre en œuvre le procédé selon la revendication 2.

5. Dispositif de transmission selon la revendication 3, le dispositif de transmission comprenant un processeur, dans lequel le processeur est couplé à une mémoire comprenant des instructions qui, lorsqu'elles sont exécutées par le processeur, amènent le processeur à mettre en œuvre le procédé selon la revendication 1.

6. Dispositif de transmission selon la revendication 4, le dispositif de transmission comprenant un processeur, dans lequel le processeur est couplé à une mémoire comprenant des instructions qui, lorsqu'elles sont exécutées par le processeur, amènent le processeur à mettre en œuvre le procédé selon la revendication 2.

7. Support de stockage lisible par ordinateur, dans lequel le support de stockage lisible par ordinateur stocke un programme informatique comprenant des instructions qui, lorsqu'elles sont exécutées par l'ordinateur, amènent l'ordinateur à mettre en œuvre le procédé selon les revendications 1 et 2.

8. Produit programme informatique comprenant des instructions qui, lorsque le programme est exécuté par un ordinateur, amènent l'ordinateur à mettre en œuvre le procédé selon l'une quelconque des revendications 1 et 2.
